# EUROPÄISCHE PATENTSCHRIFT

(11) **EP 3 332 626 B1**
(45) Veröffentlichungstag und Bekanntmachung des Hinweises auf die Patenterteilung: **25.09.2019**
(21) Anmeldenummer: 17205707.7
(22) Anmeldetag: 06.12.2017
(51) Int. Cl.: A01C 23/00, A01C 23/04

(54) **FASSWAGEN MIT EINER FÖRDERVORRICHTUNG**
TANK WAGON WITH A CONVEYING DEVICE
CITERNE POURVU D'UN DISPOSITIF DE TRANSPORT

(30) Priorität: 07.12.2016 DE 202016106814 U
(43) Veröffentlichungstag der Anmeldung: 13.06.2018
(73) Patentinhaber: Fliegl Agro-Center GmbH, 84556 Kastl (DE)
(72) Erfinder: FLIEGL, Josef, sen., 84556 Kastl (DE)
(74) Vertreter: Nußbaum, Christopher

(56) Entgegenhaltungen:
- EP-A1- 2 929 770
- FR-A1- 2 611 687
- GB-A- 2 100 676
- US-A- 5 649 573

## Beschreibung

Die Erfindung betrifft eine Fördervorrichtung für einen Fasswagen und einen Fasswagen mit einer derartigen Fördervorrichtung.

Fasswagen, beispielsweise in Form von Wagen mit daran angebrachten Güllefässern, werden vielfach in der Landwirtschaft eingesetzt. Bei einem Güllefass handelt es sich um ein landwirtschaftliches Gerät zur Ausbringung von Gülle bzw. Jauche auf Feldern oder Grünland. Güllefässer verfügen vielfach über ein eigenes Anhängerfahrwerk, es gibt aber auch Geräte zum Aufbau auf ein Trägerfahrzeug. Soweit das Güllefass als Anhänger konstruiert ist, wird es von einem Traktor gezogen. Die Pumpvorrichtung des Fasses wird über die Zapfwelle des Zug- bzw. Trägerfahrzeugs angetrieben. Bei den als Anhänger gebauten Güllefässern besteht teilweise die Möglichkeit, über die Wegezapfwelle des Traktors die Anhängerachse anzutreiben.

Fördereinrichtungen für einen Fasswagen sind offenbart in US 5 649 573 A.

Bei Fasswagen, insbesondere bei Güllefässern, besteht eine Herausforderung darin, die im Fasswagen enthaltene Flüssigkeit zielgenau heraus zu befördern bzw. auch die Fasswagen wiederum zu befüllen.

Es ist Aufgabe der vorliegenden Erfindung, eine Fördervorrichtung für einen Fasswagen bereitzustellen, mittels welcher auf besonders einfache und flexible Weise Flüssigkeiten in einen Fasswagen hinein und auch aus diesem heraus befördert werden können.

Diese Aufgabe wird durch eine Fördervorrichtung für einen Fasswagen mit den Merkmalen des unabhängigen Anspruchs 1 gelöst. Vorteilhafte Ausgestaltungen mit zweckmäßigen und nicht trivialen Weiterbildungen der Erfindung sind in den abhängigen Ansprüchen angegeben.

Die erfindungsgemäße Fördervorrichtung für einen Fasswagen umfasst einen Auslegearm zum Befördern von Flüssigkeiten, welcher einen ersten Leitungsteil aufweist, der relativ zum Fasswagen um eine in Längsrichtung des Fasswagens verlaufende erste Drehachse verschwenkbar an diesem befestigbar ist, und einen zweiten Leitungsteil aufweist, welcher um eine in Längsrichtung des Fasswagens verlaufende zweite Drehachse am ersten Leitungsteil verschwenkbar befestigt ist. Des Weiteren umfasst die erfindungsgemäße Fördervorrichtung ein Gelenkviereck mit einem Gestell, einer Schwinge, einer Koppel und einer Kurbel zum Verschwenken der Leitungsteile um die Drehachsen. Die Schwinge wird dabei durch zumindest einen Hydraulikzylinder gebildet, wobei die Koppel parallel zum zweiten Leitungsteil verlaufend an diesem befestigt und die Kurbel mittels wenigstens eines weiteren Hydraulikzylinders relativ zum Gestell verschwenkbar ist.

Ein wesentliches Merkmal der erfindungsgemäßen Fördervorrichtung ist das Gelenkviereck, bei welchem die Schwinge durch zumindest einen Hydraulikzylinder gebildet ist. Ein Gelenkviereck wird häufig auch als viergliedriges Koppelgetriebe bezeichnet, welches in seiner Grundform aus vier in einer Ebene liegenden drehbar verbundenen Stäben ausgeführt ist. Dadurch, dass bei der erfindungsgemäßen Fördervorrichtung die Schwinge des Gelenkvierecks des viergliedrigen Koppelgetriebes aus zumindest einem Hydraulikzylinder gebildet ist, kann der Auslegearm besonders einfach und flexibel eingesetzt und verstellt werden.

Durch das Gelenkviereck an sich ergibt sich eine bestimmte Art der Zwangskopplung bei der Verschwenkbewegung des Auslegearms, also beim Verschwenken der beiden Leitungsteile des Auslegearms relativ zum Fasswagen bzw. relativ zueinander. Dies erleichtert die Steuerung des Auslegearms, je nachdem wie dieser gerade angeordnet werden soll, um beispielsweise Flüssigkeiten in den Fasswagen hinein zu befördern, aus diesem hinaus zu befördern oder den Auslegearm gegebenenfalls auch so zu verstauen, dass dieser bei Nichtgebrauch besonders platzsparend untergebracht werden kann.

Dadurch, dass die Schwinge des Gelenkvierecks durch zumindest einen Hydraulikzylinder gebildet wird, kann durch Betätigung des Hydraulikzylinders die Kinematik des Gelenkvierecks und somit die Bewegung, insbesondere die Verschwenkbewegung, des Auslegearms besonders einfach kontrolliert und variiert werden. Die beiden Leitungsteile des Auslegearms können dadurch besonders einfach auf jeweilige Randbedingung angepasst zueinander und relativ zum betreffenden Fasswagen verschwenkt werden.

Der Auslegearm der Fördervorrichtung kann somit auf verschiedenste Arten verstellt werden. Die Fördervorrichtung mitsamt dem Auslegearm kann dabei als Nachrüstsatz beispielsweise an Pumpfässern, Vakuumfässern oder auch an Schleuderfässern montiert werden. Die Fördervorrichtung für den Fasswagen kann dabei z.B. als Saugvorrichtung eingesetzt werden, um Flüssigkeiten in den Fasswagen hinein zu befördern oder auch als Pumpvorrichtung, um im Fasswagen enthaltene Flüssigkeiten aus diesem hinaus zu pumpen.

Eine vorteilhafte Ausführungsform der Erfindung sieht vor, dass der Auslegearm in eine Transportstellung verstellbar ist, in welcher die beiden Leitungsteile zumindest im Wesentlichen in Hochrichtung des Fasswagens verlaufen und der zweite Leitungsteil seitlich an den Fasswagen herangeschwenkt ist. Die Fördervorrichtung kann dafür eine Steuereinrichtung aufweisen, mittels welcher die jeweiligen Hydraulikzylinder der Fördervorrichtung derart angesteuert werden können, dass der Auslegearm in die beschriebene Transportstellung verstellt wird. Die Steuervorrichtung kann ganz unabhängig von den verschiedenen Ausführungsformen der Erfindung immer Teil der Fördervorrichtung sein, um die Verstellung des Auslegearms zu steuern. Vorzugsweise kann die Steuereinrichtung von einem Traktor aus bedient werden, mittels welchem ein Fasswagen gezogen wird, an welchem die Fördervorrichtung dann montiert ist. Die besagte Transportstellung kann beispielsweise auch in der Steuereinrichtung fest abgespeichert sein, sodass zum Beispiel durch die Betätigung eines bestimmten Knopfs oder einer Taste der Auslegearm besonders einfach und automatisch in die Transportstellung verstellt werden kann. In der Transportstellung ist der Auslegearm so angeordnet, dass die beiden Leitungsteile besonders eng aneinander anliegend sich in Hochrichtung des Fasswagens erstrecken, sofern die Fördervorrichtung am Fasswagen montiert ist. Der Auslegearm ist in der Transportstellung also besonders platzsparend am Fasswagen angeordnet, was beispielsweise dann von Vorteil ist, wenn mittels des Fasswagens öffentliche Straßen befahren werden müssen.

Eine weitere vorteilhafte Ausführungsform der Erfindung sieht vor, dass der Auslegearm in eine nach oben geschwenkte Stellung verstellbar ist, in welcher der erste Leitungsteil zumindest im Wesentlichen in Hochrichtung des Fasswagens verläuft und der zweite Leitungsteil zumindest im Wesentlichen in Querrichtung des Fasswagens verlaufend von diesem weggeschwenkt ist. In dieser nach oben geschwenkten Stellung kann der Auslegearm beispielsweise dafür verwendet werden, Flüssigkeiten aus einem zweiten Fasswagen herauszupumpen bzw. herauszusaugen, welcher neben dem Fasswagen angeordnet ist, an welchem die Fördervorrichtung montiert ist. Alternativ kann der Auslegearm in der nach oben geschwenkten Stellung auch dafür verwendet werden, eine Flüssigkeit aus dem Fasswagen, an welchem die Fördervorrichtung montiert ist, in einen daneben stehenden Fasswagen zu befördern.

Gemäß einer weiteren vorteilhaften Ausführungsform der Erfindung ist es vorgesehen, dass der Auslegearm in eine seitlich nach unten geschwenkte Stellung verstellbar ist, in welcher der erste Leitungsteil zumindest im Wesentlichen in Querrichtung des Fasswagens verlaufend seitlich weggeschwenkt und der zweite Leitungsteil zumindest im Wesentlichen Hochrichtung des Fasswagens verlaufend nach unten geschwenkt ist. In dieser seitlich nach unten geschwenkten Stellung kann der Auslegearm beispielsweise dafür genutzt werden, um diesen in eine Grube hinabzulassen, in welcher sich eine Flüssigkeit befindet, welche mittels der Fördervorrichtung in den Fasswagen gepumpt wird. Umgekehrt ist es natürlich auch möglich, dass eine Flüssigkeit aus dem Fasswagen mittels des in die Grube herabgelassenen Auslegearms in diese befördert wird. Durch die Kinematik des Gelenkvierecks und insbesondere aufgrund der Ausführung der Schwinge des Gelenkvierecks durch den zumindest ein Hydraulikzylinder kann der Auslegearm besonders einfach und kontrolliert in die seitlich nach unten geschwenkte Stellung verstellt werden, sodass einer Grubenöffnung nicht sonderlich groß in ihren Abmaßen sein muss, um den Auslegearm gefahrlos in diese hinabsenken zu können.

In weiterer vorteilhafter Ausgestaltung der Erfindung ist es vorgesehen, dass der Auslegearm in eine seitlich schräg gekippte Stellung verstellbar ist, in welcher der erste Leitungsteil seitlich schräg vom Fasswagen weggeschwenkt und der zweite Leitungsteil schräg zur Hochrichtung des Fasswagens verläuft. Sollte Gülle beispielsweise statt in einem Silo oder in einer Grube in einer teichartigen Lagerstätte bereitgestellt werden, so ist es von Vorteil, wenn der Auslegearm in die seitlich schräg gekippte Stellung verstellt werden kann. Dadurch kann der Auslegearm weit genug weg vom betreffenden Fasswagen bewegt und dennoch tief genug abgesenkt werden, um beispielsweise Gülle in den Fasswagen zu pumpen oder aus diesem auch hinaus zu pumpen.

Eine weitere vorteilhafte Ausführungsform der Erfindung sieht vor, dass der erste Leitungsteil an gegenüberliegenden Längsenden einen ersten Flansch und einen zweiten Flansch aufweist, welche mittels eines Schlauchs miteinander verbunden sind, wobei der erste Flansch relativ zum Fasswagen um die erste Drehachse verschwenkbar an diesem befestigbar und der zweite Flansch um die zweite Drehachse verschwenkbar an einem Flansch des zweiten Leitungsteils befestigt ist. Der Großteil des ersten Leitungsteils wird also durch einen Schlauch gebildet. Dadurch kann der erste Leitungsteil bei der Verstellung des Auslegearms flexibel verformt werden, was den Bewegungsspielraum und die Verstellmöglichkeiten des Auslegearms positiv begünstigt. Insbesondere können dadurch unnötige mechanische Spannungen beim Bewegen des Auslegearms reduziert bzw. verhindert werden. Durch die Befestigung bzw. Befestigbarkeit des ersten Leitungsteils über die jeweiligen Flansche kann dieser besonders zuverlässig und fest am Fasswagen und auch am zweiten Leitungsteil befestigt werden. Das erste Leitungsteil kann dabei über eine Flanschverbindung mit dem Fasswagen und über eine weitere Flanschverbindung mit dem zweiten Leitungsteil verbunden sein. Die jeweiligen Flanschverbindungen dienen dabei als Drehgelenke, welche die Verschwenkung um die erste und um die zweite Drehachse ermöglichen.

In weiterer vorteilhafter Ausgestaltung der Erfindung ist es vorgesehen, dass der zweite Leitungsteil als teleskopierbares Rohr ausgebildet ist. Dadurch kann der zweite Leitungsteil bei Bedarf ausgefahren und eingefahren werden. Vorzugsweise ist direkt am zweiten Leitungsteil ein Hydraulikzylinder angebracht, mittels welchem ein Endabschnitt aus dem restlichen zweiten Leitungsteil aus- und einfahrbar ist. Statt eines Hydraulikzylinders können auch mehrere Hydraulikzylinder am zweiten Leitungsteil vorgesehen sein, sodass mehrere Abschnitte des Leitungsteils bei Bedarf ausgefahren und eingefahren werden können. Durch die Teleskopierbarkeit des zweiten Leitungsteils kann die Fördervorrichtung besonders flexibel eingesetzt werden. Grundsätzlich ist es aber auch möglich, dass der zweite Leitungsteil als nicht teleskopierbares Rohr ausgebildet ist. Besonders bevorzugt ist der zweite Leitungsteil aber als Rohr ausgebildet, sei es nun teleskopierbar oder nicht. Dadurch, kann der zweite Leitungsteil, da dieser in dem Fall biegeschlaff ist, besonders gut relativ zum Fasswagen und zum ersten Leitungsteil verschwenkt werden.

Ein Fasswagen umfasst die erfindungsgemäße Fördervorrichtung oder eine vorteilhafte Ausführungsform der erfindungsgemäßen Fördervorrichtung. Ferner weist der Fasswagen ein Pumpfass, ein Vakuumfass oder ein Schleuderfass auf, an welchem die Fördervorrichtung angeschlossen ist. Weitere Vorteile, Merkmale und Einzelheiten der Erfindung ergeben sich aus der nachfolgenden Beschreibung eines bevorzugten Ausführungsbeispiels sowie anhand der Zeichnung.

Die Zeichnung zeigt in:
- Fig. 1: eine Perspektivansicht eines Fasswagens mit einer daran angebrachten Fördervorrichtung, welche einen Auslegearm zum Befördern von Flüssigkeiten umfasst, wobei der Auslegearm in einer an den Fasswagen herangeschwenkten Transportstellung angeordnet ist;
- Fig. 2: eine weitere Perspektivansicht des Fasswagens, wobei der Auslegearm der Fördervorrichtung in einer nach oben geschwenkten Stellung positioniert ist, in welcher ein Teil des Auslegearms waagerecht angeordnet ist;
- Fig. 3: eine weitere Perspektivansicht des Fasswagens mit der daran angebrachten Fördervorrichtung, wobei der Auslegearm wiederum in der nach oben geschwenkten Stellung angeordnet ist, um einen weiteren Fasswagen zu befüllen;
- Fig. 4: eine weitere Perspektivansicht des Fasswagens mit der daran angebrachten Fördervorrichtung, wobei der Auslegearm der Fördervorrichtung in einer seitlich nach unten geschwenkten Stellung angeordnet ist, in welcher ein Großteil des Auslegearms in einer senkrecht nach unten abgesenkten Stellung positioniert ist; und in
- Fig. 5: eine weitere Perspektivansicht des Fasswagens mit der daran angebrachten Fördervorrichtung, wobei der Auslegearm der Fördervorrichtung in eine seitlich schräg gekippte Stellung verstellt ist.

In den Figuren werden gleiche oder funktionsgleiche Elemente mit den gleichen Bezugszeichen versehen.

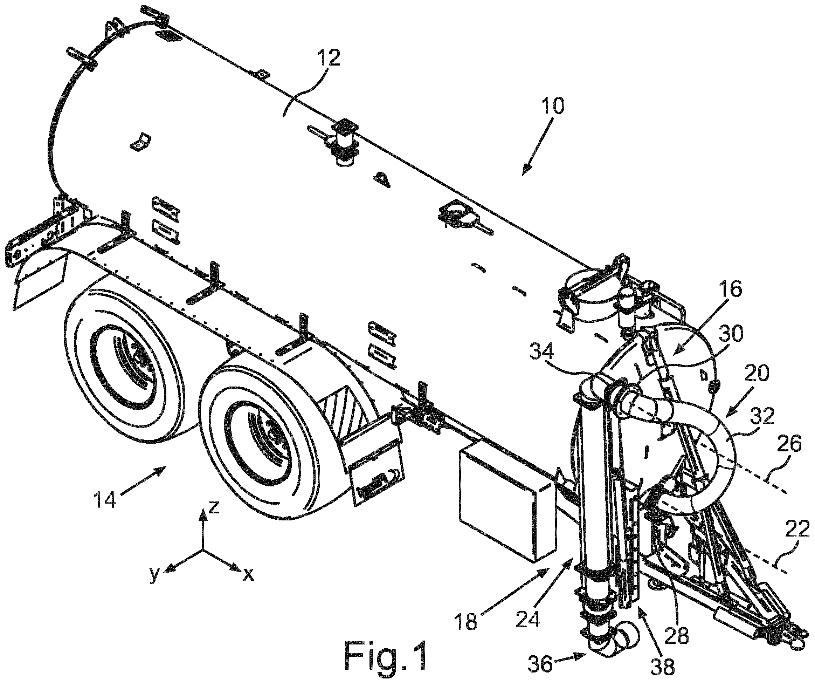

Ein Fasswagen 10 ist in einer Perspektivansicht in Fig. 1 gezeigt. Der Fasswagen 10 umfasst ein Güllefass 12, welches oberhalb von einem Fahrwerk 14 des Fasswagens angeordnet ist. Am Fasswagen 10, genauer am Fass 12, ist eine Fördervorrichtung 16 angeschlossen. Die Fördervorrichtung 16 umfasst einen Auslegearm 18 zum Befördern von Flüssigkeiten. Der Auslegearm 18 kann dafür verwendet werden, Flüssigkeiten in das Fass 12 hinein zu befördern oder auch aus dem Fass 12 hinaus zu befördern.

Der Auslegearm 18 umfasst einen ersten Leitungsteil 20, der relativ zum Fasswagen 10 um eine in Längsrichtung x des Fasswagens 10 verlaufende erste Drehachse 22 verschwenkbar an diesem befestigt ist. Des Weiteren umfasst der Auslegearm 18 einen zweiten Leitungsteil 24, welcher um eine in Längsrichtung x des Fasswagens 10 verlaufende zweite Drehachse 26 am ersten Leitungsteil 20 verschwenkbar befestigt ist.

Der erste Leitungsteil 20 weist an gegenüberliegenden Längsenden einen ersten Flansch 28 und einen zweiten Flansch 30 auf, welche mittels eines Schlauchs 32 miteinander verbunden sind. Der erste Flansch 28 ist relativ zum Fasswagen 10 um die erste Drehachse 22 verschwenkbar an diesem befestigt, wobei der zweite Flansch 30 um die zweite Drehachse 26 verschwenkbar an einem weiteren Flansch 34 des zweiten Leitungsteils 24 befestigt ist.

Der zweite Leitungsteil 24 ist im Gegensatz zum ersten Leitungsteil 20 vollständig als Rohr ausgebildet, wobei der zweite Leitungsteil 24 im vorliegend gezeigten Fall als einfach teleskopierbares Rohr ausgebildet ist. Dadurch kann ein Endabschnitt 36 aus dem restlichen zweiten Leitungsteil 39 ausgefahren und in dieses wieder eingefahren werden.

Um den Auslegearm 18 in verschiedene Positionen verstellen zu können, weist die Fördervorrichtung 16 ein Gelenkviereck 38 auf, welches noch anhand der nachfolgenden Figuren genauer erläutert wird. In der vorliegenden Darstellung ist der Auslegearm 16 in einer Transportstellung angeordnet, in welcher die beiden Leitungsteile 20, 24 zumindest im Wesentlichen in Hochrichtung z des Fasswagens 10 verlaufen, wobei der zweite Leitungsteil 24 seitlich an den Fasswagen 10 herangeschwenkt ist. In dieser Transportstellung ist der Auslegearm 18 besonders dicht am Fasswagen 10 angeordnet, sodass der Auslegearm 18 kaum oder gar nicht über den restlichen Fasswagen 10 hinausragt.

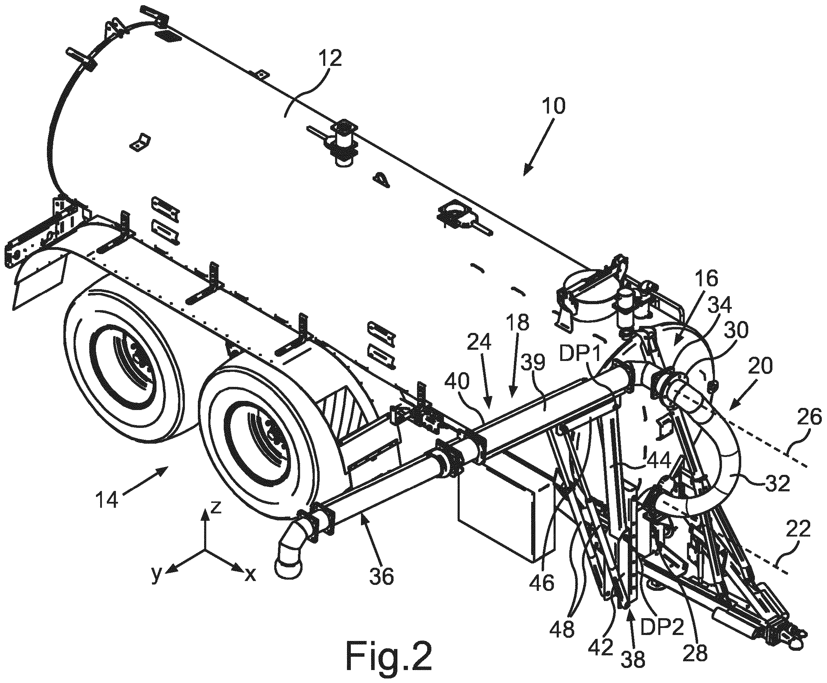

In Fig. 2 ist der Fasswagen 10 in einer weiteren Perspektivansicht dargestellt, wobei der Auslegearm 18 in eine nach oben geschwenkten Stellung verschwenkt bzw. so verstellt worden ist, in welcher der erste Leitungsteil 20 mit dem Schlauch 32 zumindest im Wesentlichen in Hochrichtung z des Fasswagens 10 verläuft und der zweite Leitungsteil 24 zumindest im Wesentlichen in Querrichtung y des Fasswagens 10 verlaufend von diesem weggeschwenkt ist.

Wie zu erkennen, ist der Endabschnitt 36 aus dem restlichen zweiten Leitungsteil 39 ausgefahren worden. Das Einfahren und Ausfahren des Endabschnitts 36 aus dem zweiten Leitungsteil 24 bzw. in diesen hinein erfolgt mittels eines Hydraulikzylinders 40, welcher am zweiten Leitungsteil 24, genauer am restlichen zweiten Leitungsteil 39, angebracht ist. Dadurch kann der Endabschnitt 36 ein- und ausgefahren werden, wodurch der Auslegearm 18 bedarfsgerecht verlängert und verkürzt werden kann.

Der Aufbau des zuvor bereits erwähnten Gelenkvierecks 38 ist in der vorliegenden Darstellung gut zu erkennen. Das Gelenkviereck 38 umfasst ein unbeweglich am Fasswagen 10 angebrachtes Gestell 42, eine Kurbel 44, eine Koppel 46 und zwei als Schwinge dienende Hydraulikzylinder 48. Im Gegensatz zu einem herkömmlichen Gelenkviereck ist bei dem vorliegenden Gelenkviereck 38 also die Schwinge 48 nicht durch ein starres stabförmiges Element oder ein anderweitig in seinen Abmessungen nicht veränderliches Element gebildet. Stattdessen wird die Schwinge 48 durch die zwei Hydraulikzylinder 48 ausgebildet, infolgedessen die Kinematik des Gelenkvierecks 38 durch Ausfahren und Einfahren der Hydraulikzylinder 48 verändert werden kann.

Die Kurbel 44 wird durch ein Metallprofil gebildet, welches beispielsweise aus einer Aluminium- oder Stahllegierung hergestellt sein kann. Gleiches kann auch für das Gestell 42, die Kurbel 44 und die Koppel 46 zutreffen. Die Koppel 46 verläuft parallel zum zweiten Leitungsteil 24, wobei die Koppel 46 am zweiten Leitungsteil 24 befestigt ist. Die Koppel 46 kann durch Ein- und Ausfahren der beiden Hydraulikzylinder 48, welche wie erwähnt als die sogenannte Schwinge des Gelenkvierecks 38 dienen, um einen ersten Drehpunkt DP1 des Gelenkvierecks 38 verschwenkt werden. Infolgedessen wird der zweite Leitungsteil 24 zum ersten Leitungsteil 20 im Bereich der beiden Flansche 30, 34 um die Drehachse 26 verschwenkt.

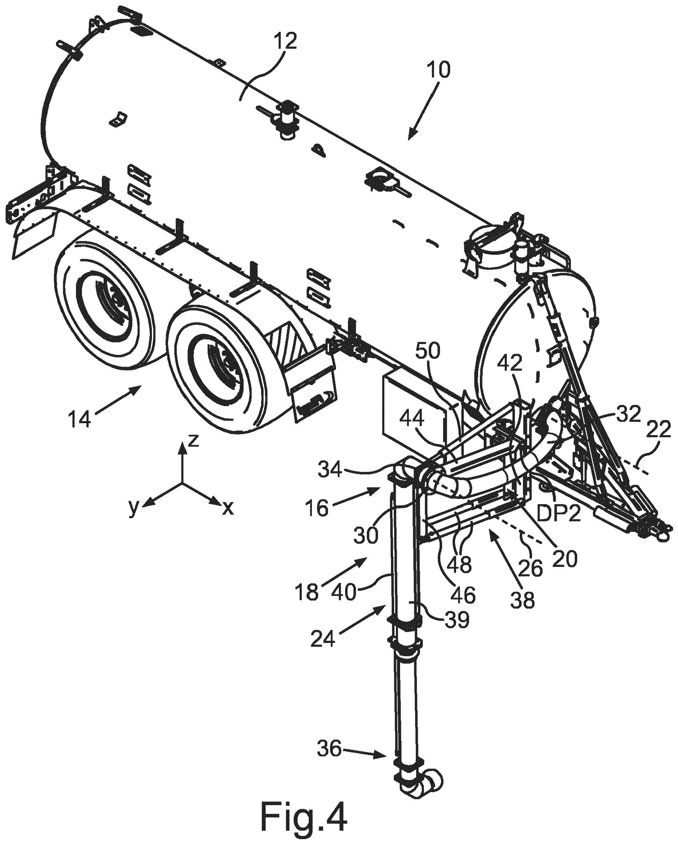

Die Kurbel 44 kann wiederum mittels eines hier nicht erkennbaren weiteren Hydraulikzylinders 50 (erstmals in Fig. 4 zu erkennen) relativ zum Gestell 42 um einen zweiten Drehpunkt DP2 Gelenkvierecks 38 verschwenkt werden. Infolgedessen wird der erste Leitungsteil 20 im Bereich des Flansches 28, mittels welchem der erste Leistungsteil 20 am Fass 12 angeschlossen ist, um die Drehachse 22 verschwenkt.

Die Drehpunkte DP1, DP2 bilden Drehachsen, welche parallel zu den Drehachsen 22, 26 verlaufen. Mit anderen Worten weißt das Gelenkviereck 28 also an den Drehpunkten DP1, DP2 jeweilige Scharniergelenke auf, welche einen Drehfreiheitsgrad um jeweilige hier nicht näher bezeichnete Drehachsen aufweisen, die sich durch die Drehpunkte DP1, DP2 in Längsrichtung x des Fasswagens 10 erstrecken. Durch eine kombinierte Betätigung der Hydraulikzylinder 48, 50 können somit die beiden Leitungsteile 20, 24 des Auslegearms relativ zueinander und auch relativ zum Fasswagen 10 verschwenkt werden, und zwar unter Ausnutzung der Drehfreiheitsgrade um die Drehpunkte DP1, DP2 und Drehachsen 22, 26. Letztere Drehfreiheitsgrade resultieren aus den durch die jeweiligen Flansche 28, 30, 34 gebildeten Flanschverbindungen.

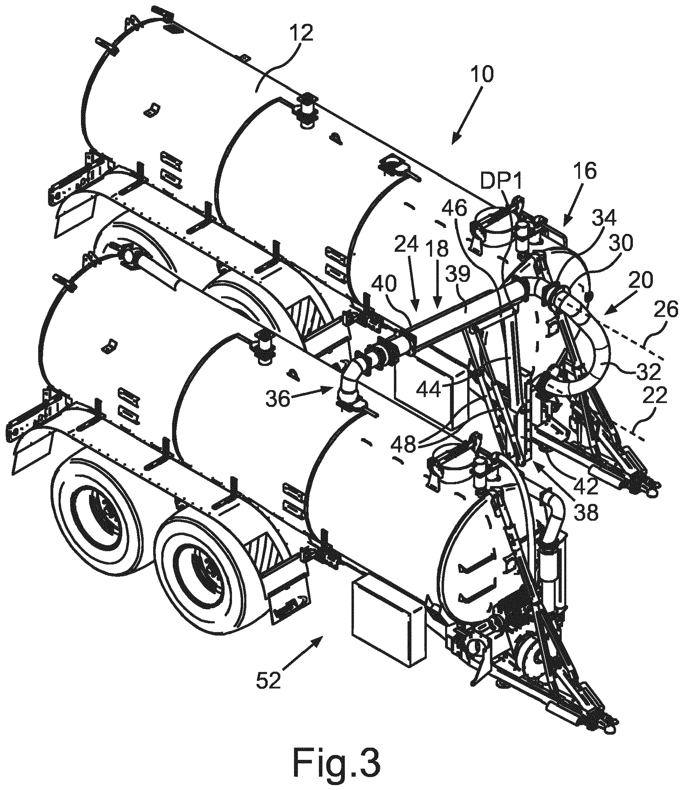

In Fig. 3 ist der Fasswagen 10, an welchem die Fördervorrichtung 16 mit dem Auslegearm 18 befestigt ist, in einer weiteren Perspektivansicht gezeigt. In der vorliegenden Darstellung ist der Auslegearm 18 wiederum in seiner nach oben geschwenkten Stellung angeordnet, in welcher der erste Leitungsteil 20 im Wesentlichen senkrecht und der zweite Leitungsteil 24 im Wesentlichen waagerecht angeordnet ist, um einen anderen Fasswagen 52 zu befüllen. Um den Auslegearm 18 in diese Stellung zu bewegen, müssen lediglich die beiden Hydraulikzylinder 48 des Gelenkvierecks 38 ausgefahren werden. Infolgedessen schwenkt der zweite Leitungsteil 24 um die zweite Drehachse 26 nach oben, weil die Koppel 46 um den ersten Drehpunkt DP1 verschwenkt wird, an welchem die Koppel 46 drehbar an der Kurbel 44 befestigt ist.

In Fig. 4 ist der Fasswagen 10 in einer weiteren Perspektivansicht gezeigt, wobei der Auslegearm 18 in eine seitlich nach unten geschwenkte Stellung verstellt worden ist, in welcher der erste Leitungsteil 20 zumindest im Wesentlichen in Querrichtung y des Fasswagens 10 verlaufend seitlich weggeschwenkt und der zweite Leitungsteil 24 zumindest im Wesentlichen in Hochrichtung z des Fasswagens 10 verlaufend nach unten geschwenkt ist.

In dieser Stellung kann der Auslegearm 18 beispielsweise dafür verwendet werden, Gülle aus einer Güllegrube heraus zu befördern, um diese in das Fass 12 des Fasswagens 10 hinein zu befördern oder auch umgekehrt. Um den Auslegearm 18 in die hier gezeigte seitlich nach unten geschwenkte Stellung zu verstellen, wird der Hydraulikzylinder 50 ausgefahren, infolgedessen die Kurbel 44 um den zweiten Drehpunkt DP2 rotiert wird, an welchem die Kurbel 44 am Gestell 42 drehbar gelagert ist. Durch Einfahren des Hydraulikzylinders 50 kann der Auslegearm 18 wiederum nach oben geschwenkt werden.

Wird ausgehend von der hier gezeigten, seitlich nach unten geschwenkten Stellung der Auslegearm 18 einfach nur durch Einfahren des Hydraulikzylinders 50 nach oben geschwenkt, so wird der gesamte Auslegearm 18 um den zweiten Drehpunkt DP2 einfach wiederum nach oben geschwenkt, infolgedessen die in den Figuren 2 und 3 gezeigte Stellung des Auslegearms 18, also die nach oben geschwenkte Stellung, eingenommen wird. Werden zudem noch die beiden Hydraulikzylinder 48 eingefahren, so wird der Auslegearm 18 wiederum in die in Fig. 1 gezeigte Transportstellung bewegt.

Durch kombinierte Ansteuerung der Hydraulikzylinder 48 und 50 kann ausgehend von der hier gezeigten seitlich nach unten geschwenkten Stellung auch bewirkt werden, dass der Auslegearm 18 mit seinem zweiten Leitungsteil 24 fast ausschließlich in Hochrichtung z, also in senkrechter Richtung, nach oben bewegt werden kann. Wurde der Auslegearm 18 beispielsweise in eine relativ enge Grube abgesenkt, so kann dieser auch ohne an seitlichen Begrenzungen der Grube anzuecken aus dieser wieder herausgehoben werden.

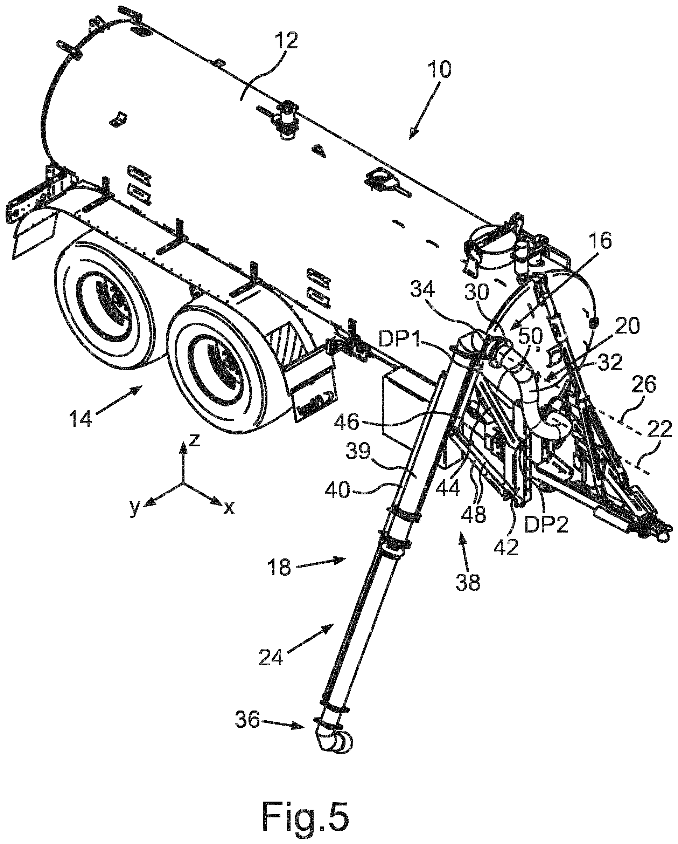

In Fig. 5 ist der Fasswagen 10 in einer weiteren Perspektivansicht gezeigt, wobei der Auslegearm 18 in eine seitlich schräg gekippte Stellung verstellt worden ist, in welcher der erste Leitungsteil 20 seitlich schräg vom Fasswagen 10 weggeschwenkt und der zweite Leitungsteil 24 schräg zur Hochrichtung z des Fasswagens 10 verläuft. Diese Stellung des Auslegearms 18 ist insbesondere dann günstig, wenn mittels der Fördervorrichtung 16 Flüssigkeiten, wie beispielsweise Gülle oder dergleichen, aus einem relativ flach abfallenden Behältnis oder aus einer sehr flach abfallenden Grube in den Fasswagen 10 befördert werden sollen. Um die hier gezeigte Stellung des Auslegearm 18 einzustellen, werden sowohl die die Schwinge 48 des Gelenkvierecks 38 bildenden Hydraulikzylinder 48 als auch der zum Antreiben der Koppel 46 dienende Hydraulikzylinder 50 gleichermaßen betrieben. Wie zu erkennen, ist zudem der am zweiten Leitungsteil 24 des Auslegearms 18 angebrachte Hydraulikzylinder 40 ausgefahren worden, um den Endabschnitt 36 aus dem restlichen zweiten Leitungsteil an 39 auszufahren.

### BEZUGSZEICHENLISTE:

- 10: Fasswagen
- 12: Güllefass
- 14: Fahrwerk
- 16: Fördervorrichtung
- 18: Auslegearm
- 20: erster Leitungsteil
- 22: erste Drehachse
- 24: zweiter Leitungsteil
- 26: zweite Drehachse
- 28: Flansch
- 30: Flansch
- 32: Schlauch
- 34: Flansch
- 36: Endabschnitt
- 38: Gelenkviereck
- 39: restlicher zweiter Leitungsteil
- 40: Hydraulikzylinder
- 42: Gestell
- 44: Kurbel
- 46: Koppel
- 48: Schwinge
- 50: Hydraulikzylinder
- 52: Fasswagen
- x: Längsrichtung
- y: Querrichtung
- z: Hochrichtung

## Patentansprüche

1. Fördervorrichtung (16) für einen Fasswagen (10), umfassend
- einen Auslegearm (18) zum Befördern von Flüssigkeiten, welcher einen ersten Leitungsteil (20), der relativ zum Fasswagen (10) um eine in Längsrichtung (x) des Fasswagens (10) verlaufende erste Drehachse (22) verschwenkbar an diesem befestigbar ist, und einen zweiten Leitungsteil (24) aufweist, welcher um eine in Längsrichtung (x) des Fasswagens (10) verlaufende zweite Drehachse (26) am ersten Leitungsteil (20) verschwenkbar befestigt ist;
- ein Gelenkviereck (38) mit einem Gestell (42), einer Schwinge (48), einer Koppel (46) und einer Kurbel (44) zum Verschwenken der Leitungsteile (20, 24) um die Drehachsen (22, 26);
- wobei die Schwinge (48) durch zumindest einen Hydraulikzylinder gebildet, die Koppel (46) parallel zum zweiten Leitungsteil (24) verlaufend an diesem befestigt und die Kurbel (44) mittels wenigstens eines weiteren Hydraulikzylinders (50) relativ zum Gestell (42) verschwenkbar ist.

2. Fördervorrichtung (16) nach Anspruch 1,
**dadurch gekennzeichnet, dass**
der Auslegearm (18) in eine Transportstellung verstellbar ist, in welcher die beiden Leitungsteile (20, 24) zumindest im Wesentlichen in Hochrichtung (z) des Fasswagens (10) verlaufen und der zweite Leitungsteil (24) seitlich an den Fasswagen (10) herangeschwenkt ist.

3. Fördervorrichtung (16) nach Anspruch 1 oder 2,
**dadurch gekennzeichnet, dass**
der Auslegearm (18) in eine nach oben geschwenkte Stellung verstellbar ist, in welcher der erste Leitungsteil (20) zumindest im Wesentlichen in Hochrichtung (z) des Fasswagens (10) verläuft und der zweite Leitungsteil (24) zumindest im Wesentlichen in Querrichtung (y) des Fasswagens (10) verlaufend von diesem weggeschwenkt ist.

4. Fördervorrichtung (16) nach einem der vorhergehenden Ansprüche,
**dadurch gekennzeichnet, dass**
der Auslegearm (18) in eine seitlich nach unten geschwenkte Stellung verstellbar ist, in welcher der erste Leitungsteil (20) zumindest im Wesentlichen in Querrichtung (y) des Fasswagens (10) verlaufend seitlich weggeschwenkt und der zweite Leitungsteil (24) zumindest im Wesentlichen in Hochrichtung (z) des Fasswagens (10) verlaufend nach unten geschwenkt ist.

5. Fördervorrichtung (16) nach einem der vorhergehenden Ansprüche,
**dadurch gekennzeichnet, dass**
der Auslegearm (18) in eine seitlich schräg gekippte Stellung verstellbar ist, in welcher der erste Leitungsteil (20) seitlich schräg vom Fasswagen (10) weggeschwenkt und der zweite Leitungsteil (22) schräg zur Hochrichtung (z) des Fasswagens (10) verläuft.

6. Fördervorrichtung (16) nach einem der vorhergehenden Ansprüche,
**dadurch gekennzeichnet, dass**
der erste Leitungsteil (20) an gegenüberliegenden Längsenden einen ersten Flansch (28) und einen zweiten Flansch (30) aufweist, welche mittels eines Schlauchs (32) miteinander verbunden sind, wobei der erste Flansch (28) relativ zum Fasswagen (10) um die erste Drehachse (22) verschwenkbar an diesem befestigbar und der zweite Flansch (30) um die zweite Drehachse (26) verschwenkbar an einem Flansch (34) des zweiten Leitungsteils (24) befestigt ist.

7. Fördervorrichtung (16) nach einem der vorhergehenden Ansprüche,
**dadurch gekennzeichnet, dass**
der zweite Leitungsteil (24) als teleskopierbares Rohr ausgebildet ist.

8. Fördervorrichtung (16) nach Anspruch 7,
**dadurch gekennzeichnet, dass**
am zweiten Leitungsteil (24) ein Hydraulikzylinder (40) angebracht ist, mittels welchem ein Endabschnitt (36) aus dem restlichen zweiten Leitungsteil (39) aus- und einfahrbar ist.

9. Fasswagen (10) mit einer Fördervorrichtung (16) nach einem der vorhergehenden Ansprüche.

10. Fasswagen (10) nach Anspruch 9,
**dadurch gekennzeichnet, dass**
der Fasswagen (10) ein Pump-, Vakuum- oder Schleuderfass aufweist, an welchem die Fördervorrichtung (16) angeschlossen ist.

## Claims

1. Conveyor device (16) for a tank cart (10), comprising
- an extension arm (18) for conveying liquids, which has a first pipe part (20) which is able to be fastened to the tank cart (10) pivotably relative to the tank cart about a first rotational axis (22) running in longitudinal direction (x) of the tank cart (10), and a second pipe part (24) which is fastened, pivotably about a second rotational axis (26) running in longitudinal direction (x) of the tank cart (10), on the first pipe part (20);
- a four-bar linkage (38) having a frame (42), a swing arm (48), a coupler (46) and a crank arm (44) to pivot the pipe parts (20, 24) about the rotational axes (22, 26);
- wherein the swing arm (48) is formed by at least one hydraulic cylinder, the coupler (46), running parallel to the second pipe part (24), is fastened to said second pipe part and the crank arm (44) is pivotable relative to the frame (42) by means of at least one further hydraulic cylinder (50).

2. Conveyor device (16) according to claim 1,
**characterised in that**
the extension arm (18) is adjustable into a transport position in which the two pipe parts (20, 24) run at least substantially in vertical direction (z) of the tank cart (10) and the second pipe part (24) is pivoted laterally to the tank cart (10).

3. Conveyor device (16) according to claim 1 or 2,
**characterised in that**
the extension arm (18) is adjustable into a position pivoted upwards, in which the first pipe part (20) runs at least substantially in vertical direction (z) of the tank cart (10) and the second pipe part (24), running at least substantially in transverse direction (y) of the tank cart (10), is pivoted away from said tank cart.

4. Conveyor device (16) according to any of the preceding claims,
**characterised in that**
the extension arm (18) is adjustable into a position pivoted laterally downwards in which the first pipe part (20) is pivoted away laterally running at least substantially in transverse direction (y) of the tank cart (10) and the second pipe part (24) is pivoted downwards running at least substantially in the vertical direction (z) of the tank cart (10).

5. Conveyor device (16) according to any of the preceding claims,
**characterised in that**
the extension arm (18) is adjustable into a position tipped at an angle laterally, in which the first pipe part (20) is pivoted away from the tank cart (10) at an angle laterally and the second pipe part (22) runs at an angle to the vertical direction (z) of the tank cart (10).

6. Conveyor device (16) according to any of the preceding claims,
**characterised in that**
the first pipe part (20) has at opposite longitudinal ends a first flange (28) and a second flange (30), which are connected to each other by means of a tube (32), wherein the first flange (28) relatively to the tank cart (10) is able to be fastened to said tank cart pivotably about the first rotational axis (22) and the second flange (30) is fastened pivotably about the second rotational axis (26) to a flange (34) of the second pipe part (24).

7. Conveyor device (16) according to any of the preceding claims,
**characterised in that**
the second pipe part (24) is formed as a telescopable tube.

8. Conveyor device (16) according to claim 7,
**characterised in that**
a hydraulic cylinder (40) is attached to the second pipe part (24), by means of which an end section (36) made from the remaining second pipe part (39) is extendable and retractable.

9. Tank cart (10) having a conveyor device (16) according to any of the preceding claims.

10. Tank cart (10) according to claim 9,
**characterised in that**
the tank cart (10) has a pump, vacuum or centrifuge tank to which the conveyor device (16) is connected.

## Revendications

1. Dispositif de transport (16) pour une citerne (10) comprenant
- un bras en porte-à-faux (18) pour le transport de liquides qui présente une première partie de conduite (20) qui peut être fixée de manière pivotante par rapport à la citerne (10) autour d'un premier axe de rotation (22) s'étendant dans le sens longitudinal (x) de la citerne (10) à celle-ci, et une seconde partie de guidage (24) qui est fixée de manière pivotante autour d'un second axe de rotation (26) s'étendant dans le sens longitudinal (x) de la citerne (10) à la première partie de conduite (20) ;
- un quadrilatère articulé (38) avec un châssis (42), un bras oscillant (48), une bielle (46) et une manivelle (44) pour le pivotement des parties de conduite (20, 24) autour des axes de rotation (22, 26) ;
- dans lequel le bras oscillant (48) est formé par au moins un vérin hydraulique, la bielle (46) est fixée en s'étendant parallèlement à la seconde partie de conduite (24) à celle-ci et la manivelle (44) peut être pivotée au moyen d'au moins un autre vérin hydraulique (50) par rapport au châssis (42).

2. Dispositif de transport (16) selon la revendication 1,
**caractérisé en ce que**
le bras en porte-à-faux (18) est réglable dans une position de transport, dans laquelle les deux parties de conduite (20, 24) s'étendent au moins sensiblement dans le sens vertical (z) de la citerne (10) et la seconde partie de conduite (24) est pivotée latéralement au niveau de la citerne (10).

3. Dispositif de transport (16) selon la revendication 1 ou 2,
**caractérisé en ce que**
le bras en porte-à-faux (18) est réglable dans une position pivotant vers le haut, dans laquelle la première partie de conduite (20) s'étend au moins sensiblement dans le sens vertical (z) de la citerne (10) et la seconde partie de conduite (24) est pivotée en s'étendant au moins sensiblement dans le sens transversal (y) de la citerne (10) à partir de celle-ci.

4. Dispositif de transport (16) selon l'une quelconque des revendications précédentes,
**caractérisé en ce que**
le bras en porte-à-faux (18) est réglable dans une position pivotée latéralement vers le bas, dans laquelle la première partie de conduite (20) est pivotée en s'étendant au moins sensiblement dans le sens transversal (y) de la citerne (10) latéralement et la seconde partie de conduite (24) est pivotée s'étendant au moins sensiblement dans le sens vertical (z) de la citerne (10) vers le bas.

5. Dispositif de transport (16) selon l'une quelconque des revendications précédentes,
**caractérisé en ce que**
le bras en porte-à-faux (18) est réglable dans une position inclinée latéralement en biais, dans laquelle la première partie de conduite (20) est pivotée latéralement en biais depuis la citerne (10) et la seconde partie de conduite (22) s'étend en biais par rapport au sens vertical (z) de la citerne (10).

6. Dispositif de transport (16) selon l'une quelconque des revendications précédentes,
**caractérisé en ce que**
la première partie de conduite (20) présente à des extrémités longitudinales opposées une première bride (28) et une seconde bride (30) qui sont raccordées l'une à l'autre au moyen d'un tuyau (32), dans lequel la première bride (28) peut être fixée de manière pivotante par rapport à la citerne (10) autour du premier axe de rotation (22) à celle-ci et la seconde bride (30) est fixée de manière pivotante autour du second axe de rotation (26) à une bride (34) de la seconde partie de conduite (24).

7. Dispositif de transport (16) selon l'une quelconque des revendications précédentes,
**caractérisé en ce que**
la seconde partie de conduite (24) est réalisée en tant que tube télescopique.

8. Dispositif de transport (16) selon la revendication 7,
**caractérisé en ce que**
un vérin hydraulique (40) est monté au niveau de la seconde partie de conduite (24), au moyen duquel une section d'extrémité (36) peut être sortie de la seconde partie de conduite restante (39) et rentrée dans celle-ci.

9. Citerne (10) avec un dispositif de transport (16) selon l'une quelconque des revendications précédentes.

10. Citerne (10) selon la revendication 9,
**caractérisée en ce que**
la citerne (10) présente une cuve à pompe, à vide ou à centrifugation, à laquelle le dispositif de transport (16) est raccordé.
